# EUROPEAN PATENT APPLICATION

(11) **EP 4 822 045 A1**
(43) Date of publication of application: **14.10.2026**
(21) Application number: 26165291.1
(22) Date of filing: 17.03.2026
(51) Int. Cl.: C22B 15/00, C22B 3/00, C22B 3/44, C22B 7/00

(54) **METHOD FOR RECOVERING COPPER**

(30) Priority: 09.04.2025 JP 2025064487
(71) Applicant: Prime Planet Energy & Solutions, Inc., Chuo-ku, Tokyo 103-0022 (JP); The University of Tokyo, Bunkyo-ku, Tokyo 113-8654 (JP)
(72) Inventor: SUZUKI, Shinya, Tokyo, 103-0022 (JP); OUCHI, Takanari, Tokyo, 113-8654 (JP)
(74) Representative: Kuhnen & Wacker Patent- und Rechtsanwaltsbüro PartG mbB

(57) **Abstract**

A method for recovering copper that is capable of separating and recovering Cu with high selectivity from an object containing Ni, Co, and Cu is provided. The method for recovering copper of the present disclosure includes a first ammonia leaching step of leaching an object containing Ni, Co, and Cu as metals using first ammonia water having a concentration of 2.5 mol/L or less to obtain an aqueous phase containing Cu and a solid residue. The leaching in the first ammonia leaching step is performed in the presence of oxygen.

## Description

### BACKGROUND OF THE DISCLOSURE

### 1. Field

The present disclosure relates to a method for recovering copper.

### 2. Background

Lithium-ion secondary batteries are widely used in various fields as vehicle driving power sources, portable power sources, and the like. In recent years, from the viewpoint of SDGs, material recycling of used lithium-ion secondary batteries has been progressing. In lithium-ion secondary batteries, various metal elements are used, and for material recycling, technologies for separating metal elements contained in used lithium-ion secondary batteries are being developed.

Representative examples of positive electrode active materials of lithium-ion secondary batteries that have been put to practical use in vehicle-mounted applications include lithium nickel cobalt manganese-based composite oxides (NCM) and lithium nickel cobalt aluminum-based composite oxides (NCA), and these contain Ni and Co. On the other hand, as the negative electrode current collector of lithium-ion secondary batteries, copper foil is typically used. Therefore, waste of lithium-ion secondary batteries often contains Ni, Co, and Cu.

As an example of a technique for separating metal elements from waste of lithium-ion secondary batteries, Patent Document 1 may be cited. In Patent Document 1, from waste of lithium-ion secondary batteries containing Ni, Co, and Cu, a leachate containing Ni, Co, and Cu is obtained using an acid and a reducing agent, and from the leachate, Cu is precipitated as a sulfide (i.e., CuS) using a hydrogen sulfide compound, thereby separating Cu from Ni and Co.

### [Prior Art Documents]

### [Patent Documents]

[Patent Document 1] Japanese Unexamined Patent Application Publication No. 2023-150907

### SUMMARY

However, as in the above Patent Document 1, when Cu is precipitated and separated as CuS from a leachate containing Ni, Co, and Cu, NiS and CoS also undesirably precipitate simultaneously, thereby causing a problem that the recovery rates of Ni and Co decrease.

Therefore, an object of the present disclosure is to provide a method for recovering copper, which is capable of separating and recovering Cu with high selectivity from an object containing Ni, Co, and Cu.

The method for recovering copper of the present disclosure includes a first ammonia leaching step of leaching an object containing Ni, Co, and Cu as metals using first ammonia water having a concentration of 2.5 mol/L or less to obtain an aqueous phase containing Cu and a solid residue. The leaching in the first ammonia leaching step is performed in the presence of oxygen.

According to such a configuration, Cu can be separated and recovered with high selectivity from an object containing Ni, Co, and Cu.

### BRIEF DESCRIPTION OF THE DRAWINGS

FIG. 1 is a flowchart showing an outline of the method for recovering copper according to the present disclosure and each step;
FIG. 2 is a vertical cross-sectional view schematically showing the internal structure of an example of a lithium-ion secondary battery; and
FIG. 3 is a schematic exploded view showing the configuration of the electrode body of the lithium-ion secondary battery shown in FIG. 2.

### DETAILED DESCRIPTION OF THE PREFERRED EMBODIMENTS

Hereinafter, embodiments according to the present disclosure will be described with reference to the drawings. It should be noted that matters not mentioned in the present specification but necessary for carrying out the present disclosure can be grasped as design matters of a person skilled in the art based on the prior art in the relevant field. The present disclosure can be carried out based on the content disclosed in the present specification and technical common knowledge in the relevant field. In the following drawings, the same reference numerals are assigned to members and portions having the same functions for explanation. Further, dimensional relationships (length, width, thickness, etc.) in each drawing do not reflect actual dimensional relationships. It should be noted that in the present specification, a numerical range expressed as "A to B" includes A and B.

It should be noted that in the present specification, "secondary battery" refers to a power storage device capable of repeated charging and discharging. Further, in the present specification, "lithium-ion secondary battery" refers to a secondary battery that uses lithium ions as charge carriers and achieves charging and discharging by the transfer of charges accompanying lithium ions between positive and negative electrodes.

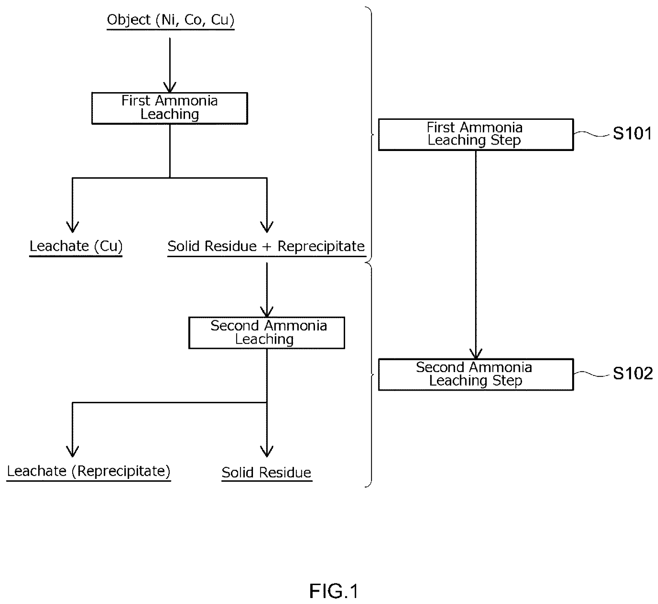

FIG. 1 is a flowchart showing an outline of the method for recovering copper (Cu) of the present disclosure and each step. The method for recovering copper of the present disclosure includes, as an essential step, a first ammonia leaching step S101 of leaching an object containing Ni, Co, and Cu as metals using first ammonia water having a concentration of 2.5 mol/L or less to obtain an aqueous phase containing Cu and a solid residue. The leaching in the first ammonia leaching step S101 is performed in the presence of oxygen. The method for recovering copper of the present disclosure may further include, as an optional step, a second ammonia leaching step S102 of performing leaching on the solid residue obtained in the first ammonia leaching step S101 under an inert gas atmosphere using second ammonia water. Further, the method for recovering copper of the present disclosure may include, as optional steps, a roasting step described later, a Cu recovery step, and the like.

The method for recovering copper of the present disclosure is performed on an object containing Ni, Co, and Cu as metals. The type of this object is not particularly limited as long as it contains Ni, Co, and Cu as metals, and examples include battery waste containing Ni, Co, and Cu as metals, and waste other than battery waste containing Ni, Co, and Cu as metals. The object containing Ni, Co, and Cu is desirably battery waste, more desirably waste of secondary batteries, and particularly desirably waste of lithium-ion secondary batteries. Therefore, first, lithium-ion secondary batteries will be specifically described.

### <Lithium-Ion Secondary Battery>

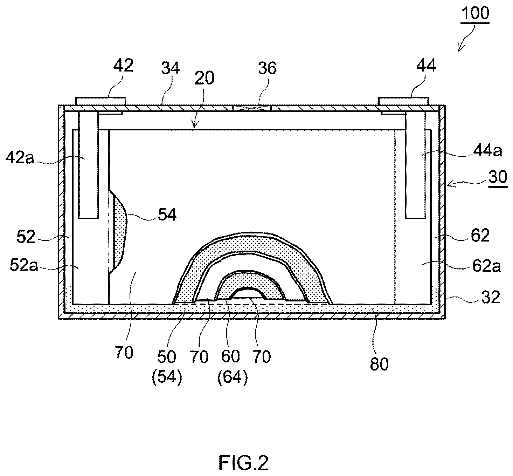

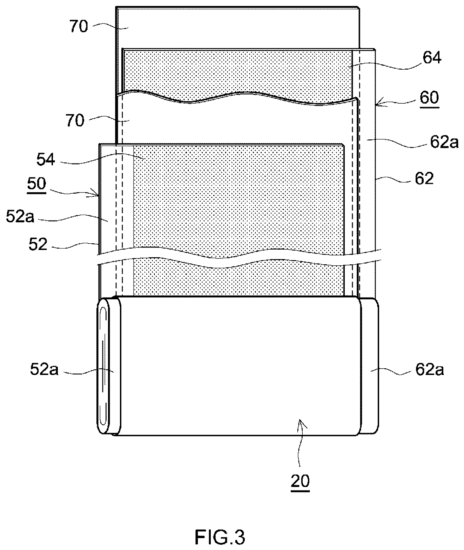

A general configuration of a lithium-ion secondary battery will be described with examples. An example of the structure of a lithium-ion secondary battery is shown in FIGS. 2 and 3. FIG. 2 is a vertical cross-sectional view schematically showing the internal structure of an example of a lithium-ion secondary battery. FIG. 3 is a schematic exploded view showing the electrode body of the lithium-ion secondary battery shown in FIG. 2. It should be noted that the following description of the lithium-ion secondary battery is for convenience of understanding and does not limit the method for recovering copper of the present disclosure in any way.

As shown in FIG. 2, a lithium-ion secondary battery 100 is a sealed battery in which a flat-shaped electrode body 20 and a non-aqueous electrolyte (not shown) are housed inside a battery case 30. As shown in FIG. 2, the battery case 30 is composed of an exterior body 32 that houses the electrode body 20, and a lid 34 that seals an opening of the exterior body 32. The exterior body 32 and the lid 34 are welded and sealed by laser welding or the like. As the material of the battery case 30, for example, aluminum, aluminum alloy, resin, or the like is used.

In the illustrated example, the battery case 30 has a prismatic shape. However, the shape of the battery case 30 is not limited to this, and may be, for example, a cylindrical shape. Alternatively, the battery case 30 may be a laminate case having a gas barrier layer such as an aluminum layer and a sealant layer containing a thermoplastic resin.

The battery case 30 includes a positive electrode terminal 42 and a negative electrode terminal 44 for external connection. Further, the battery case 30 is provided with a safety valve 36 set to release the internal pressure when the internal pressure of the battery case 30 rises to a predetermined level or higher. The battery case 30 is provided with an injection port (not shown) for injecting the non-aqueous electrolyte. The positive electrode terminal 42 is electrically connected to a positive electrode current collecting plate 42a. The negative electrode terminal 44 is electrically connected to a negative electrode current collecting plate 44a.

As shown in FIGS. 2 and 3, the electrode body 20 has a form in which an elongated positive electrode sheet 50 and an elongated negative electrode sheet 60 are superposed with two elongated separator sheets 70 interposed therebetween and wound in the longitudinal direction. Therefore, in the present embodiment, the electrode body 20 is a wound electrode body. However, the electrode body 20 is not limited to this, and may be a stacked-type electrode body in which a plurality of positive electrodes and a plurality of negative electrodes are alternately stacked with separators interposed therebetween.

As shown in FIG. 2, in the positive electrode sheet 50, a positive electrode active material layer 54 is formed on one side or both sides (here, both sides) of a positive electrode current collector 52 along the longitudinal direction. The positive electrode sheet 50 has a positive electrode active material layer non-formed portion 52a, which is a portion where the positive electrode active material layer 54 is not formed and the positive electrode current collector 52 is exposed. The positive electrode current collecting plate 42a is joined to the positive electrode active material layer non-formed portion 52a.

An example of the positive electrode current collector 52 constituting the positive electrode sheet 50 includes aluminum foil and the like. The positive electrode active material layer 54 contains a positive electrode active material. Typically, a lithium transition metal composite oxide containing Ni and Co is used as the positive electrode active material. Examples of the positive electrode active material include lithium nickel cobalt manganese-based composite oxides, lithium nickel cobalt aluminum-based composite oxides, and the like. The positive electrode active material layer 54 may contain a conductive material (e.g., carbon black, carbon nanotube, etc.), a binder (e.g., polyvinylidene fluoride, etc.), and the like.

The content of the positive electrode active material in the positive electrode active material layer 54 is desirably 70% by mass or more, and more desirably 85% by mass or more and 99% by mass or less. The content of the conductive material in the positive electrode active material layer 54 is desirably 0.1% by mass or more and 20% by mass or less, and more desirably 0.3% by mass or more and 15% by mass or less. The content of the binder in the positive electrode active material layer 54 is desirably 0.4% by mass or more and 15% by mass or less, and more desirably 0.5% by mass or more and 10% by mass or less.

As shown in FIG. 2, in the negative electrode sheet 60, a negative electrode active material layer 64 is formed on one side or both sides (here, both sides) of a negative electrode current collector 62 along the longitudinal direction. The negative electrode sheet 60 has a negative electrode active material layer non-formed portion 62a, which is a portion where the negative electrode active material layer 64 is not formed and the negative electrode current collector 62 is exposed. The negative electrode current collecting plate 44a is joined to the negative electrode active material layer non-formed portion 62a.

The negative electrode current collector 62 constituting the negative electrode sheet 60 is typically copper foil. The negative electrode active material layer 64 contains a negative electrode active material. Examples of the negative electrode active material include carbon-based negative electrode active materials (e.g., graphite, hard carbon, soft carbon, etc.), silicon-based negative electrode active materials (e.g., silicon, silicon oxide, etc.), and the like. The negative electrode active material layer 64 may contain a binder (e.g., styrene butadiene rubber (SBR), etc.), a thickener (e.g., carboxymethyl cellulose (CMC), etc.), and the like.

The content of graphite in the negative electrode active material layer 64 is desirably 90% by mass or more, and more desirably 95% by mass or more and 99% by mass or less. The content of the binder in the negative electrode active material layer 64 is desirably 0.1 % by mass or more and 8% by mass or less, and more desirably 0.5% by mass or more and 3% by mass or less. The content of the thickener in the negative electrode active material layer 64 is desirably 0.3% by mass or more and 3% by mass or less, and more desirably 0.5% by mass or more and 2% by mass or less.

Examples of the separator 70 include porous resin sheets such as polyethylene and polypropylene. The porous sheet may have a single-layer structure or a multi-layer structure. A heat resistant layer (HRL) may be provided on the surface of the separator 70.

The non-aqueous electrolyte typically contains a non-aqueous solvent and a supporting salt (in other words, an electrolyte salt). Examples of the non-aqueous solvent include carbonates (e.g., ethylene carbonate, ethyl methyl carbonate, dimethyl carbonate, etc.), esters, ethers, and the like. Examples of the supporting salt include lithium salts such as LiPF₆. The concentration of the supporting salt is not particularly limited, but is desirably 0.7 mol/L to 1.3 mol/L. The non-aqueous electrolyte may contain various additives such as a gas generating agent and a film forming agent. It should be noted that in the present embodiment, a non-aqueous electrolyte is used as the electrolyte, but the electrolyte may be a solid electrolyte.

The lithium-ion secondary battery 100 is used, for example, for vehicle-mounted applications (i.e., for driving power sources of vehicles such as electric vehicles (BEV), hybrid vehicles (HEV), plug-in hybrid vehicles (PHEV)), power source applications for electronic devices, and the like.

As described above, in the positive electrode of a lithium-ion secondary battery, Li, Ni, and Co are typically used as the constituent metal elements of the positive electrode active material. The positive electrode active material may further contain Mn or Al. Al is generally used for the positive electrode current collector. Cu is typically used for the negative electrode current collector. In addition, in the lithium-ion secondary battery, Li is used in the non-aqueous electrolyte. Further, Al may be used for the battery case. Hereinafter, each step of the method for recovering copper of the present disclosure will be described in detail.

### <First Ammonia Leaching Step S101>

In the first ammonia leaching step S101, ammonia leaching is performed on an object containing Ni, Co, and Cu as metals using low-concentration ammonia water in the presence of oxygen.

As described above, the object containing Ni, Co, and Cu as metals is not particularly limited, but is desirably battery waste (particularly waste of lithium-ion secondary batteries). It should be noted that in the present specification, "battery waste" includes not only used batteries but also constituent members of used batteries (e.g., electrode bodies, etc.), defective batteries, and constituent members of defective batteries (e.g., electrode bodies, etc.). The battery waste may be one that has been subjected to some treatment (e.g., roasting treatment).

It is particularly desirable that the object is black mass obtained by crushing and reducing-roasting waste of lithium-ion secondary batteries (also referred to as roasted black mass of lithium-ion secondary batteries), in which Ni, Co, and Cu are contained as metals. In lithium-ion secondary batteries, Ni and Co are contained in the form of composite oxides as positive electrode active materials. Cu is contained in the form of metal as a negative electrode current collector. In the roasted black mass of waste of lithium-ion secondary batteries, Ni and Co are reduced to metal during roasting, and therefore substantially all (desirably 90 mol% or more, particularly desirably 100 mol%) of Ni and Co is contained as metal. Therefore, the roasted black mass of waste of lithium-ion secondary batteries is particularly suitable for the recovery method of the present disclosure because the amount of Ni, Co, and Cu contained as metals is very large.

The roasted black mass can be obtained, for example, specifically by crushing a lithium-ion secondary battery according to a known method, and performing sieving if necessary, and roasting at a temperature of 700°C to 1500°C (desirably 800°C to 1000°C) in an atmosphere with an oxygen concentration of 5 vol% or less (desirably 1 vol% or less) (particularly, under an inert gas atmosphere such as argon gas or nitrogen gas) for 1 hour to 24 hours (desirably 4 hours to 12 hours). The roasted black mass may be one from which a specific metal species has been removed through selection.

Therefore, the method for recovering copper of the present disclosure may further include, as an optional step, a step of roasting waste of lithium-ion secondary batteries to obtain an object containing Ni, Co, and Cu as metals (i.e., roasted black mass) (hereinafter also referred to as "roasting step"). The roasting step is performed before the first ammonia leaching step S101. The roasting conditions in the roasting step are as described above.

It should be noted that by the above roasting, liquid components (e.g., electrolyte solution, etc.) in the waste of lithium-ion secondary batteries can be removed, and resin components (e.g., binder, separator, etc.) can be carbonized. Further, by roasting, the function as a battery can be stopped.

The object may further contain elements (particularly metal elements) other than Ni, Co, and Cu. For example, the object may contain other transition metal elements, and in particular, may further contain Mn. For example, the object may further contain metal elements other than transition metals such as Li and Al. Further, the object may contain a part of Ni, Co, and Cu in a form other than metal. For example, the object may contain at least one oxide selected from the group consisting of Ni oxide, Co oxide, and Cu oxide in addition to metallic Ni, metallic Co, and metallic Cu.

In the first ammonia leaching step S101, Cu is leached from the object containing Ni, Co, and Cu as metals. First ammonia water is used as a leaching agent for this leaching.

Here, when the concentration of the ammonia water is too high, Ni and Co are also leached together with Cu. Therefore, in order to leach Cu with high selectivity, the concentration of the first ammonia water (i.e., the concentration of ammonia in the first ammonia water) is 2.5 mol/L or less. From the viewpoint of higher Cu selectivity, the concentration of the first ammonia water is desirably 1.0 mol/L or less, more desirably 0.7 mol/L or less, and still more desirably 0.5 mol/L or less. The lower limit of the concentration of the first ammonia water is not particularly limited, but if it is too low, the leaching rate becomes slow and a long leaching time is required. Therefore, the concentration of the first ammonia water is desirably 0.05 mol/L or more, more desirably 0.1 mol/L or more, and still more desirably 0.3 mol/L or more.

The first ammonia water typically contains only water and ammonia. However, the first ammonia water may further contain components other than water and ammonia within a range (e.g., at a concentration of less than 10% by mass, 5% by mass or less, or 1% by mass or less) that does not impair the effects of the present disclosure.

The amount of the first ammonia water used is not particularly limited, and may be about the same as the amount of ammonia water used in known ammonia leaching methods. For example, the amount of the first ammonia water used is an amount that completely immerses the object.

Dissolution of metallic Cu into ammonia water usually involves oxygen. Therefore, the leaching in the first ammonia leaching step S101 is performed in the presence of oxygen. It should be noted that "in the presence of oxygen" is intended to mean that oxygen exists in the atmosphere of the first ammonia leaching step S101 and oxygen is dissolved in the first ammonia water. Therefore, by dissolving oxygen in the first ammonia water, Cu can be preferentially leached into the aqueous phase.

Therefore, for example, the leaching in the first ammonia leaching step S101 can be performed under an atmosphere containing oxygen. Here, the greater the amount of dissolved oxygen, the higher the leaching rate of Cu becomes. Therefore, the oxygen concentration of the leaching atmosphere is desirably 21 vol% or more, more desirably 30 vol% or more, still more desirably 50 vol% or more, and particularly desirably 99 vol% or more (most desirably 100 vol%). Here, since the oxygen concentration in the air is about 21 vol%, the leaching in the first ammonia leaching step S101 can be performed in a container or reaction tank that is open to the air. Alternatively, a gas containing oxygen may be supplied to the atmosphere (i.e., gas phase). At this time, the gas containing oxygen may be supplied into a sealed container and pressurization may be performed.

Alternatively, the leaching in the first ammonia leaching step S101 can be performed while supplying a gas containing oxygen to the first ammonia water. At this time, oxygen can be stably dissolved in the first ammonia water, which is advantageous. From the viewpoint of a high leaching rate of Cu, the oxygen concentration of the gas containing oxygen is desirably high, and specifically, is desirably 21 vol% or more, more desirably 30 vol% or more, still more desirably 50 vol% or more, and particularly desirably 99 vol% or more (most desirably 100 vol%).

It should be noted that since the oxygen concentration in the air is about 21 vol%, the atmosphere containing oxygen and the gas containing oxygen may be the air. Further, the oxygen concentration of the atmosphere containing oxygen and the gas containing oxygen can be adjusted according to a known method. For example, the oxygen concentration can be adjusted by mixing oxygen gas with an inert gas (e.g., nitrogen gas, argon gas, etc.) or the air so as to obtain a predetermined oxygen concentration. Further, when only oxygen gas is used as the atmosphere containing oxygen and the supplied gas, that is, when the atmosphere containing oxygen and the supplied gas contain only oxygen gas, the oxygen concentration can be made 99 vol% or more (particularly 100 vol%).

The supply of the gas containing oxygen to the first ammonia water can be performed according to a known method. For example, it can be performed by supplying a gas containing oxygen to the first ammonia water by bubbling. Here, when only oxygen gas is supplied to the first ammonia water by bubbling, the leaching rate of Cu becomes particularly high. At this time, the smaller the bubbles, the more efficiently the amount of dissolved oxygen can be increased.

The first ammonia leaching step S101 can be performed, for example, as follows. First, a container is prepared. The container may be a known container used for ammonia leaching. If necessary, heating means such as a heater, temperature measuring means such as a thermometer or a temperature sensor, stirring means such as a stirring blade or a magnetic stirrer, and the like are attached to the container. Further, a bubbling device is prepared. The bubbling device may be a known one used in leaching. The bubbling device may be attached to the container before charging the object and the first ammonia water, or may be attached to the container after charging the object and the first ammonia water.

The object and the first ammonia water are charged into the container. The order in which these are charged is not particularly limited, and either may be charged first, or they may be charged simultaneously. On the other hand, a gas containing oxygen is supplied as bubbles to the first ammonia water by the bubbling device.

As for the amount of oxygen supplied by the gas, it is desirable that the gas is supplied in excess with respect to the element to be oxidized (i.e., Cu) contained in the object.

The first ammonia leaching step S101 may be performed at room temperature (i.e., 25±10°C) or under heating. The leaching temperature is desirably more than 0°C and 80°C or less, more desirably 10°C or more and 50°C or less, and still more desirably 15°C or more and 35°C or less.

The leaching time can be appropriately determined according to the leaching temperature. The higher the leaching temperature, the shorter the time required to complete leaching. The leaching time is, for example, 1 hour or more, desirably 2 hours or more, and more desirably 4 hours or more. On the other hand, from the viewpoint of operational efficiency, the leaching time is, for example, 48 hours or less, desirably 24 hours or less, and more desirably 10 hours or less.

It is desirable to perform stirring during leaching. The stirring speed is not particularly limited, but is desirably 200 rpm or more, more desirably 400 rpm or more, and still more desirably 500 rpm or more. The stirring speed may be 2000 rpm or less, 1000 rpm or less, or 800 rpm or less.

By performing the first ammonia leaching as described above, Cu can be preferentially leached into the aqueous phase (i.e., the first ammonia water). Specifically, in the first ammonia leaching step S101, by using the first ammonia water having a low concentration of 2.5 mol/L or less and dissolving oxygen in the first ammonia water, Cu can be leached at a high leaching rate while suppressing the leaching of Ni and Co.

The first ammonia leaching can be terminated by performing solid-liquid separation such as filtration. By this solid-liquid separation, an aqueous phase (i.e., a leachate) containing Cu and a solid residue can be obtained. The first ammonia leaching S101 can be performed as described above.

Cu can be separated and recovered from the leachate according to a known method. For example, according to a known method, by evaporating ammonia from the leachate, Cu can be precipitated as copper oxide (CuO). Then, by recovering the precipitate by solid-liquid separation, Cu can be recovered as copper oxide. Alternatively, when a hydroxide (e.g., LiOH, NaOH, KOH, etc.) is added to the leachate and then ammonia is evaporated, copper can be precipitated as copper hydroxide (Cu(OH)₂). Therefore, in this case, by recovering the precipitate by solid-liquid separation, Cu can be recovered as copper hydroxide.

Therefore, the method for recovering copper of the present disclosure may further include a step of recovering Cu from the aqueous phase containing Cu obtained in the first ammonia leaching S101 (hereinafter also referred to as "Cu recovery step"). Specifically, the Cu recovery step is a step of evaporating ammonia from the aqueous phase containing Cu obtained in the first ammonia leaching step S101 to recover CuO, a step of adding sodium hydroxide to the aqueous phase containing Cu obtained in the first ammonia leaching step S101 and then evaporating ammonia from the aqueous phase to recover Cu(OH)₂, or the like.

The recovered Cu can be reused as a raw material for a negative electrode current collector according to a known method. Therefore, the method for recovering copper of the present disclosure can be applied as a method for producing a raw material for a negative electrode current collector.

### <Second Ammonia Leaching Step S102>

As described above, in the first ammonia leaching in the first ammonia leaching step S101, low-concentration ammonia water is used. Therefore, Ni, Co, and Cu that have been leached and dissolved are unstable in the low-concentration ammonia leachate, and thus a part of them reprecipitates on the surface of the object. This reprecipitate is considered to be a compound containing Ni, Co, and Cu, and is difficult to dissolve under the conditions of the first ammonia leaching. Therefore, in the first ammonia leaching step S101, the leaching of Cu from the object is inhibited by this reprecipitate. As a result, Cu that cannot be completely recovered remains in the solid residue obtained in the first ammonia leaching step S101.

Therefore, in the Cu recovery method of the present disclosure, a second ammonia leaching step S102 may be included in which leaching is performed on the solid residue obtained in the first ammonia leaching step S101 under an inert gas atmosphere using second ammonia water. According to the second ammonia leaching step S102, the reprecipitate can be removed from the solid residue.

Therefore, in the second ammonia leaching step S102, the reprecipitate adhering to the surface of the solid residue obtained in the first ammonia leaching step S101 is redissolved. For this purpose, second ammonia water is used.

The concentration of the second ammonia water (i.e., the concentration of ammonia in the second ammonia water) is not particularly limited. The higher the concentration of the second ammonia water, the higher the recovery rate of Cu. Therefore, the concentration of the second ammonia water is, for example, 0.3 mol/L or more, desirably 5.0 mol/L or more, more desirably 8.0 mol/L or more, still more desirably 10.0 mol/L or more, and particularly desirably 13.0 mol/L or more. The concentration of the second ammonia water may be the saturated concentration of ammonia, and may be 16.0 mol/L or less or 15.0 mol/L or less.

The second ammonia water typically contains only water and ammonia. However, the second ammonia water may further contain components other than water and ammonia within a range (e.g., at a concentration of less than 10% by mass, 5% by mass or less, or 1% by mass or less) that does not impair the effects of the present disclosure.

The amount of the second ammonia water used is not particularly limited, and may be about the same as the amount of ammonia water used in known ammonia leaching methods. For example, the amount of the second ammonia water used is an amount that completely immerses the solid residue.

Here, oxygen in the atmosphere tends to suppress the dissolution of the above-mentioned reprecipitate into the second ammonia water. It also unnecessarily leaches Ni and Co from the solid residue. Therefore, in the second ammonia leaching step S102, leaching is performed under an inert gas atmosphere. Therefore, in the second ammonia leaching step S102, leaching is normally performed under an atmosphere that does not contain oxygen. Thereby, the reprecipitate on the surface of the solid residue can be preferentially and selectively dissolved.

Examples of the inert gas include nitrogen gas, argon gas, and the like.

Here, it is advantageous to supply the inert gas to the second ammonia water by bubbling. In this case, oxygen dissolved in the second ammonia water can be removed.

The second ammonia leaching step S102 can be performed, for example, as follows. First, a container is prepared. The container may be a known container used for ammonia leaching. If necessary, heating means such as a heater, temperature measuring means such as a thermometer or a temperature sensor, stirring means such as a stirring blade or a magnetic stirrer, and the like are attached to the container. Further, a bubbling device is prepared. The bubbling device may be a known one used in leaching. The bubbling device may be attached to the container before charging the solid residue and the second ammonia water, or may be attached to the container after charging the solid residue and the second ammonia water.

The solid residue and the second ammonia water are charged into the container. The order in which these are charged is not particularly limited, and either may be charged first, or they may be charged simultaneously. On the other hand, an inert gas is supplied as bubbles to the second ammonia water by the bubbling device. The amount of gas supplied is at least an amount that replaces the atmosphere with the gas.

The second ammonia leaching step S102 may be performed at room temperature (i.e., 25±10°C) or under heating. The leaching temperature is desirably more than 0°C and 80°C or less, more desirably 10°C or more and 50°C or less, and still more desirably 15°C or more and 35°C or less.

The leaching time can be appropriately determined according to the leaching temperature. The higher the leaching temperature, the shorter the time required to complete leaching. The leaching time is, for example, 1 hour or more, desirably 2 hours or more, and more desirably 4 hours or more. On the other hand, from the viewpoint of operational efficiency, the leaching time is, for example, 48 hours or less, desirably 24 hours or less, and more desirably 10 hours or less.

It is desirable to perform stirring during leaching. The stirring speed is not particularly limited, but is desirably 200 rpm or more, more desirably 400 rpm or more, and still more desirably 500 rpm or more. The stirring speed may be 2000 rpm or less, 1000 rpm or less, or 800 rpm or less.

As described above, the reprecipitate can be dissolved in the aqueous phase (i.e., the second ammonia water). That is, the second ammonia leaching step S102 can be performed. The second ammonia leaching can be terminated by performing solid-liquid separation such as filtration. By this solid-liquid separation, a leachate and a solid residue can be obtained.

A part of Cu is leached into this leachate, and this Cu can be recovered according to a known method. Therefore, by carrying out the second ammonia leaching step S102 in addition to the first ammonia leaching step S101, the recovery rate of Cu can be increased. On the other hand, the solid residue contains Ni, Co, and Cu that has not yet been completely recovered as metals. In addition, the reprecipitate that inhibits the leaching of Cu has been removed from the solid residue, and Cu is in a state that is easily leached.

Therefore, when the solid residue obtained in the second ammonia leaching step S102 is used as an object containing Ni, Co, and Cu as metals and the first ammonia leaching step S101 and the second ammonia leaching step S102 are repeated in this order, a larger amount of Cu can be recovered.

Therefore, in the method for recovering copper of the present disclosure, it is desirable to repeatedly carry out the first ammonia leaching step S101 and the second ammonia leaching step S102 one or more times using the solid residue obtained in the second ammonia leaching step S102 as the above object. In this case, the recovery rate of Cu can be further increased, and it is also possible to recover 90% or more, or even 99% or more of Cu.

According to the method for recovering copper of the present disclosure, Cu can be separated and recovered with high selectivity from an object containing Ni, Co, and Cu. Further, the method for recovering copper of the present disclosure can be carried out simply. Further, in the solid residue that has undergone the method for recovering copper of the present disclosure, Cu has been selectively removed at a high removal rate, while most of Ni and Co remain. Therefore, when Ni and Co are recovered from this solid residue, the selectivity of recovery of Ni and Co and the recovery rate of Ni and Co become high. Therefore, the method for recovering copper of the present disclosure is extremely useful in material recycling of lithium-ion secondary batteries.

Hereinafter, test examples relating to the present disclosure will be described in detail, but it is not intended to limit the present disclosure to those shown in such test examples.

### [Examples 1 to 3 and Comparative Examples 1 to 3]

First, a roasted black mass of a leaching sample was prepared by the following procedure. A positive electrode having a positive electrode active material layer containing a lithium nickel cobalt manganese composite oxide (LiNi_{0.6}Co_{0.2}Mn_{0.2}O₂) on aluminum (Al) foil was crushed. The crushed product of the positive electrode was passed through a sieve with an opening of 500 µm to produce a positive electrode powder. Further, a negative electrode having a negative electrode active material layer containing graphite on copper foil was crushed. The crushed product of the negative electrode was passed through a sieve with an opening of 500 µm to produce a negative electrode powder. The obtained positive electrode powder and negative electrode powder were mixed to obtain a black mass. The black mass was roasted at 750°C for 6 hours under a low oxygen atmosphere. Thereby, Ni and Co were reduced, and a roasted black mass containing Ni, Co, and Cu as metals was obtained. 1 g of this roasted black mass was dissolved in an acid, and high-frequency inductively coupled plasma (ICP) emission spectroscopic analysis was performed on this. From the analysis results, the respective amounts of Ni, Co, and Cu (i.e., the respective initial amounts) in the roasted black mass were determined.

Ammonia water having the concentration shown in Table 1 was prepared. The roasted black mass of the leaching sample was charged into this ammonia water. Ammonia leaching was performed at room temperature (25°C) for 3 hours under stirring at 800 rpm while supplying the gas shown in Table 1 to the ammonia water by bubbling. Thereafter, solid-liquid separation was performed by filtration to obtain a leachate (1) and a solid residue (1).

High-frequency inductively coupled plasma (ICP) emission spectroscopic analysis was performed on the leachate (1), and the respective amounts of Ni, Co, and Cu were determined. Using these values and the values of the respective initial amounts of Ni, Co, and Cu (i.e., the respective amounts of Ni, Co, and Cu in the roasted black mass), the respective leaching rates of Ni, Co, and Cu were determined. The leaching rate of Cu was taken as the Cu recovery rate, and the average of the Ni leaching rate and the Co leaching rate was taken as the "Ni, Co loss rate". The results are shown in Table 1.

### [Table 1]

**Table 1**

| | Ammonia concentration | | Bubbling Gas | Ni, Co loss rate (%) | Cu recovery rate (%) |
|---|---|---|---|---|---|
| | (mol/L) | (mass%) | | | |
| Comparative Example 1 | 13 | 24.3 | O₂ | 30 | 65 |
| Comparative Example 2 | 13 | 24.3 | N₂ | 1 | 6 |
| Comparative Example 3 | 5 | 8.9 | O₂ | 11 | 72 |
| Example 1 | 2.5 | 4.3 | O₂ | 4 | 74 |
| Example 2 | 1 | 1.7 | O₂ | 2 | 79 |
| Example 3 | 0.5 | 0.9 | O₂ | 1 | 80 |

From the comparison between Comparative Example 1 and Comparative Example 2, it can be seen that oxygen supply is necessary to leach Cu from the leaching sample. From the comparison between Comparative Examples 1 and 3 and Examples 1 to 3, it can be seen that when the ammonia concentration is 2.5 mol/L or less, the Cu recovery rate is high and the Ni, Co loss rate is low. Further, a tendency was observed that the lower the ammonia concentration, the higher the Cu recovery rate and the lower the Ni, Co loss rate, that is, the higher the selectivity of Cu leaching and the Cu recovery rate.

### [Examples 4 to 12]

The first stage ammonia leaching (first ammonia leaching) was performed on the roasted black mass of the leaching sample under the same conditions as the ammonia leaching of Example 3 to obtain a leachate (2) and a solid residue (2).

Ammonia water having the concentration shown in Table 2 was prepared. The solid residue (2) obtained above was charged into this ammonia water. The second stage ammonia leaching (second ammonia leaching) was performed at room temperature (25°C) for 3 hours under stirring at 800 rpm while supplying the gas shown in Table 2 to the ammonia water by bubbling. Thereafter, solid-liquid separation was performed by filtration to obtain a leachate (3) and a solid residue (3).

For Examples 9 to 12, the first ammonia leaching and the second ammonia leaching were repeated. That is, the first ammonia leaching was performed again on the solid residue (3) to obtain a leachate (4) and a solid residue (4). After performing the second ammonia leaching again on the obtained solid residue (4), solid-liquid separation was performed by filtration to obtain a leachate (5) and a solid residue (5).

High-frequency inductively coupled plasma (ICP) emission spectroscopic analysis was performed on the leachates (2) to (5), and the respective amounts of Ni, Co, and Cu were determined. Using these values and the values of the respective initial amounts of Ni, Co, and Cu, the respective leaching rates of Ni, Co, and Cu were determined. It should be noted that this leaching rate is the total leaching rate for leachates (2) to (3) in Examples 4 to 8, and is the total leaching rate for leachates (2) to (5) in Examples 9 to 12. The leaching rate of Cu was taken as the Cu recovery rate, and the average of the Ni leaching rate and the Co leaching rate was taken as the "Ni, Co loss rate". The results are shown in Table 2.

### [Table 2]

**Table 2**

| | First Ammonia Leaching | | Second Ammonia Leaching | | Number of repetitions | Ni, Co loss rate (%) | Cu recovery rate (%) |
|---|---|---|---|---|---|---|---|
| | Ammonia concentration (mol/L) | Bubbling Gas | Ammonia concentration (mol/L) | Bubbling Gas | | | |
| Example 4 | 0.5 | O₂ | 0.5 | O₂ | 1 | 1 | 82 |
| Example 5 | 0.5 | O₂ | 13 | N₂ | 1 | 1 | 89 |
| Example 6 | 0.5 | O₂ | 5 | N₂ | 1 | 1 | 88 |
| Example 7 | 0.5 | O₂ | 2.5 | N₂ | 1 | 1 | 87 |
| Example 8 | 0.5 | O₂ | 0.5 | N₂ | 1 | 1 | 86 |
| Example 9 | 0.5 | O₂ | 13 | N₂ | 2 | 2 | 99 |
| Example 10 | 0.5 | O₂ | 5 | N₂ | 2 | 2 | 99 |
| Example 11 | 0.5 | O₂ | 2.5 | N₂ | 2 | 1 | 93 |
| Example 12 | 0.5 | O₂ | 0.5 | N₂ | 2 | 1 | 90 |

From the comparison between Example 4 and Examples 5 to 8, it can be seen that by performing the second ammonia leaching under an inert gas atmosphere, the recovery rate of Cu can be further increased. Further, from the comparison between Examples 5 to 8 and Examples 9 to 12, it can be seen that by repeating the first ammonia leaching and the second ammonia leaching, the recovery rate of Cu can be further increased even more. Further, from the results of Examples 5 to 12, it can be seen that the higher the concentration of the ammonia water in the second ammonia leaching, the higher the Cu recovery rate.

### [Comparative Example 4]

Ammonia water of 28% by mass concentration and ammonium sulfate ((NH₄)₂SO₄) as a pH adjuster were mixed to prepare an ammonia aqueous solution. The roasted black mass of the leaching sample was charged into this ammonia water and heated to 80°C. While maintaining this at 80°C, ammonia leaching was performed by stirring for 3 hours at a stirring speed of 500 rpm. Thereafter, solid-liquid separation was performed by filtration to obtain a leachate and a solid residue. It should be noted that this leachate contained Ni, Co, and Cu.

While supplying hydrogen sulfide gas to the obtained leachate, the leachate was stirred at a stirring speed of 600 rpm. After confirming that a black precipitate was obtained, solid-liquid separation was performed by filtration to obtain a filtrate and a precipitate.

High-frequency inductively coupled plasma (ICP) emission spectroscopic analysis was performed on the leachate after ammonia leaching, and the amounts of Ni, Co, and Cu were determined. Furthermore, ICP emission spectroscopic analysis was also performed on the black precipitate, and the amounts of Ni, Co, and Cu were determined. Thereby, it was confirmed that 99% or more of Cu had precipitated. Further, using the amounts of Ni and Co in the leachate and the amounts of Ni and Co in the precipitate, the average proportion of Ni and Co that could not be recovered (i.e., the "Ni, Co loss rate") was calculated. As a result, the Ni, Co loss rate was 85.8%.

Comparative Example 4 is a test example relating to a conventional method for recovering Cu as CuS. It can be seen that in the conventional method, the Ni, Co loss rate is markedly higher compared to the Examples.

Therefore, from the above, it can be seen that according to the method for recovering copper of the present disclosure, Cu can be separated and recovered with high selectivity from an object containing Ni, Co, and Cu.

Although specific examples of the present disclosure have been described in detail above, these are merely examples and do not limit the scope of claims. The technology described in the scope of claims includes various modifications and changes of the specific examples illustrated above.

That is, the method for recovering copper of the present disclosure is the following items [1] to [9].
[1] A method for recovering copper, including a first ammonia leaching step of leaching an object containing Ni, Co, and Cu as metals using first ammonia water having a concentration of 2.5 mol/L or less to obtain an aqueous phase containing Cu and a solid residue,
   wherein the leaching in the first ammonia leaching step is performed in the presence of oxygen.
[2] The method according to item [1], wherein the leaching in the first ammonia leaching step is performed under an atmosphere having an oxygen concentration of 21 vol% or more.
[3] The method according to item [1], wherein the leaching in the first ammonia leaching step is performed while supplying a gas having an oxygen concentration of 21 vol% or more to the first ammonia water by bubbling.
[4] The method according to item [1], wherein the leaching in the first ammonia leaching step is performed while supplying oxygen gas to the first ammonia water by bubbling.
[5] The method according to any one of items [1] to [3], further including a second ammonia leaching step of performing leaching on the solid residue obtained in the first ammonia leaching step under an inert gas atmosphere using second ammonia water.
[6] The method according to item [5], wherein the leaching in the second ammonia leaching step is performed while supplying nitrogen gas to the second ammonia water by bubbling.
[7] The method according to item [5] or [6], wherein the concentration of the second ammonia water is 5 mol/L or more.
[8] The method according to any one of items [5] to [7], wherein the solid residue obtained in the second ammonia leaching step is used as the object, and the first ammonia leaching step and the second ammonia leaching step are repeatedly carried out one or more times.
[9] The method according to any one of items [1] to [8], wherein the object is roasted black mass of waste of lithium-ion secondary batteries.

## Claims

1. A method for recovering copper, comprising a first ammonia leaching step (S101) of leaching an object containing Ni, Co, and Cu as metals using first ammonia water having a concentration of 2.5 mol/L or less to obtain an aqueous phase containing Cu and a solid residue,
wherein the leaching in the first ammonia leaching step (S101) is performed in the presence of oxygen.

2. The method according to claim 1, wherein the leaching in the first ammonia leaching step (S101) is performed under an atmosphere having an oxygen concentration of 21 vol% or more.

3. The method according to claim 1, wherein the leaching in the first ammonia leaching step (S101) is performed while supplying a gas having an oxygen concentration of 21 vol% or more to the first ammonia water by bubbling.

4. The method according to claim 1, wherein the leaching in the first ammonia leaching step (S101) is performed while supplying oxygen gas to the first ammonia water by bubbling.

5. The method according to claim 1, further comprising a second ammonia leaching step (S102) of performing leaching on the solid residue obtained in the first ammonia leaching step (S101) under an inert gas atmosphere using second ammonia water.

6. The method according to claim 5, wherein the leaching in the second ammonia leaching step (S102) is performed while supplying nitrogen gas to the second ammonia water by bubbling.

7. The method according to claim 5, wherein the concentration of the second ammonia water is 5 mol/L or more.

8. The method according to claim 5, wherein the solid residue obtained in the second ammonia leaching step (S102) is used as the object, and the first ammonia leaching step (S101) and the second ammonia leaching step (S102) are repeatedly carried out one or more times.

9. The method according to claim 1, wherein the object is roasted black mass of waste of lithium-ion secondary batteries (100).
